Europäisches Patentamt

European Patent Office

Office européen des brevets

(19)

(11) Numéro de publication: **0 209 413**
**B1**

(12) **FASCICULE DE BREVET EUROPEEN**

(45) Date de publication du fascicule du brevet:
**17.11.88**

(51) Int. Cl.⁴: **B 29 C 45/67**

(21) Numéro de dépôt: **86401237.2**

(22) Date de dépôt: **09.06.86**

(54) **Presse de type à traction.**

(30) Priorité: **19.06.85 FR 8509674**

(43) Date de publication de la demande:
**21.01.87 Bulletin 87/4**

(45) Mention de la délivrance du brevet:
**17.11.88 Bulletin 88/46**

(84) Etats contractants désignés:
**AT BE CH DE FR GB IT LI LU NL SE**

(56) Documents cités:
**EP - A - 0 050 520**
**FR - A - 1 427 490**
**US - A - 4 148 353**

(73) Titulaire: **Luczak, Jean Pierre, 34 rue Jules Guesde,
F-62430 Sallaumines (FR)**
Titulaire: **Riviere, Guy, 382 Boulevard Albert 1er,
F-59500 Douai (FR)**

(72) Inventeur: **Luczak, Jean Pierre, 34 rue Jules Guesde,
F-62430 Sallaumines (FR)**
Inventeur: **Riviere, Guy, 382 Boulevard Albert 1er,
F-59500 Douai (FR)**

(74) Mandataire: **Ecrepont, Robert, Cabinet
Ecrepont 12 Place Simon Vollant (Porte de Paris),
F-59800 Lille (FR)**

ACTORUM AG

## Description

L'invention se rapporte à une presse du type à traction c'est à dire dans laquelle les moyens produisant les forces de fermeture et de serrage sont associées au plateau fixe de manière, au moment de la fermeture, à tirer le plateau mobile en direction du plateau fixe.

Plus particulièrement mais non exclusivement, elle s'applique aux presses de mise en forme d'un matériau dans un outillage tel un moule et notamment aux presses de moulage par injection, que ces presses soient horizontales ou verticales.

Cet outillage est classiquement scindé en deux parties principales qui coopèrent entre elles.

La presse comprend quant à elle principalement un bâti rigide et au moins deux plateaux à chacun desquels se trouve associée l'une des parties de l'outillage.

Bien entendu, au moins l'un de ces plateaux est mobile en translation par rapport à l'autre qui est fixe ou considéré comme tel.

Dans toutes ces presses, la phase de fermeture comprend généralement deux étapes consécutives:
— une étape d'approche rapide des plateaux,
— une étape de serrage énergique des parties coopérantes de l'outillage l'une contre l'autre.

A cet effet, la presse comprend des moyens tels des vérins qui assurent chacun l'une de ces fonctions, lesquelles sont très différentes puisque la première demande une grande course et peu d'efforts tandis que la seconde demande une petite course mais un effort très important.

Classiquement, les parties coopérantes de l'outil sont chacune pourvues de moyens qui, lors de l'étape de fermeture de la presse, assurent leur positionnement l'une par rapport à l'autre.

Généralement, ces moyens d'autopositionnement n'interviennent durant la phase de fermeture de la presse que peu avant l'entrée en contact des faces en vis à vis des parties coopérantes de l'outillage.

En plus des moyens d'autopositionnement des parties de l'outillage, les presses alles-mêmes portent généralement des colonnes de guidage du plateau mobile par rapport au plateau fixe pendant tant leur étape d'approche que pendant leur étape de fermeture.

S'ajoutant au guidage propre à l'outillage, ce guidage de la presse est hyperstatique et a, de ce fait, le grave inconvénient d'engendrer des contraintes incontrôlables en cas de défaut de parallélisme des colonnes et/ou des faces des outillages.

Par ailleurs, cela gêne grandement l'accès au plateau fixe et mobile pour le montage-demontage des outils et pour l'extraction des pièces moulées.

Pour remédier à ces inconvénients, on connaît (US-A-4 148 353 et EP-A-50520) des presses à traction dépourvues de colonnes de guidage et dont les moyens de serrage des plateaux fixe et mobile sont associées par des éléments d'appui présentés à l'avant et à l'arrière par une structure de bridage, sur l'un au moins desquels éléments d'appui avant et arrière le plateau correspondant prend appui par l'intermédiaire des moyens de serrage et d'un faux plateau.

L'écartement entre le faux plateau et le plateau opposé ou, s'il y a, son faux plateau, est donc déterminé par la structure qui travaille alors en traction lors de l'action des moyens de serrage.

Toutefois, ces faux plateaux compliquent la presse et en augmentent à la fois le prix de revient et l'encombrement.

Un résultat que l'invention vise à obtenir est une presse du type précité qui remédie à ces inconvénients.

A cet effet, elle a pour objet une presse du type décrit dans le document EP-A-50520 caractérisé en ce que les moyens de serrage associés à un plateau fixe ou mobile prennent appui directement sur ce plateau et sur la poutre transversale d'appui de la structure de bridage qui est située derrière le plateau considéré.

L'invention sera mieux comprise à l'aide de la description ci-après faite, à titre d'exemple non limitatif, en regard du dessin ci-annexé qui représente schématiquement:

figure 1: une vue de face de la presse selon l'invention,

figure 2: une vue de dessus de la presse représentée en figure 1,

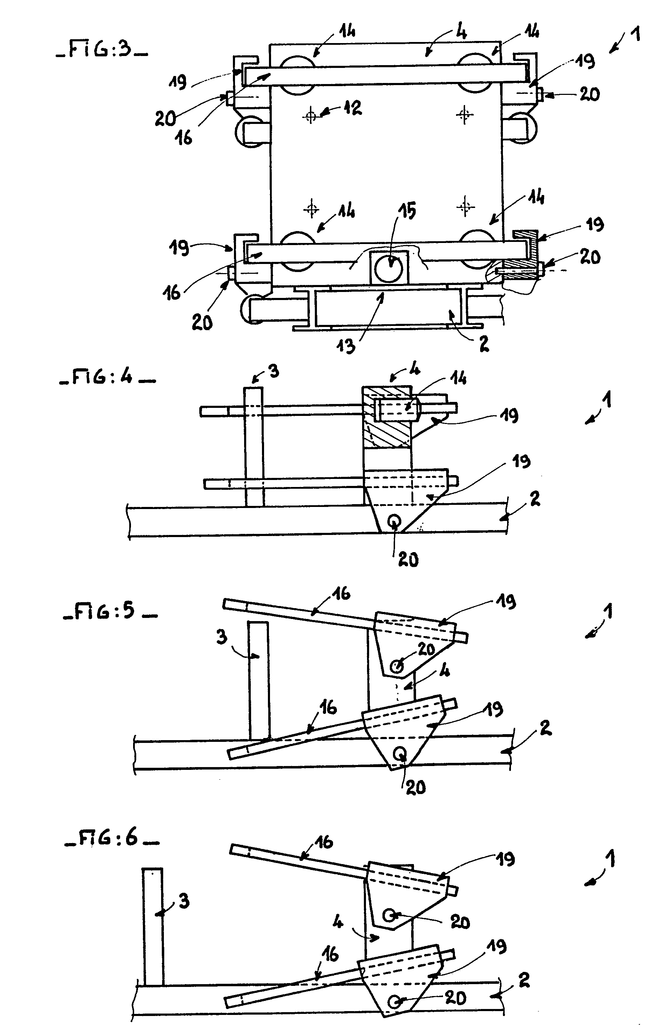

figure 3: une vue de droite de la presse représentée en figure 1,

figures 4 à 6: la presse symbolisée dans trois stades différents de son cycle de fonctionnement.

En se reportant au dessin, on voit qu'une presse 1 comprend principalement un bâti rigide 2 et aux moins deux plateaux 3, 4 entre lesquels se trouve disposé un outillage 5, tel un moule.

Classiquement, les faces utiles 6, 7 en vis à vis des plateaux 3, 4 sont situés dans des plans sensiblement parallèles.

L'outillage 5 est classiquement scindé en au moins deux parties principales 8, 9, chacune portée par l'un des plateaux 3, 4 et pourvues de leurs propres moyens 12 d'autopositionnement.

Au moins l'un des plateaux 3, 4 est mobile en translation relativement à l'autre selon une direction sensiblement perpendiculaire à la face 7 de l'autre plateau.

Pour la suite de la description, sans que cela soit limitatif pour l'invention, on considère d'une part, qu'un seul (3) des plateaux 3, 4 est mobile en translation par rapport au bâti et, d'autre part, que ce mouvement de translation du plateau mobile s'effectue sensiblement parallèlement au bâti 2 dans un plan globalement horizontal.

Le plateau mobile 3 repose sur une surface 10 du bâti qui, dans cet exemple, est sensiblement plane et horizontale et réalise ainsi un banc de guidage relatif.

Le champ 11 du plateau mobile 3 qui réalise une face d'appui coopère avec le banc 10 du bâti 2 et, de ce fait, est sensiblement perpendiculaire à sa face utile 6.

La presse est dépourvue de colonnes de guidage du plateau mobile 3 par rapport au plateau fixe 4, lesquels ne comprennent pour leur guidage:
— d'une part, que les moyens 12 d'autoposition-nement des parties 8, 9 de l'outillage 5, lesquels moyens d'autopositionnement n'interviennent qu'en fin de fermeture et,

— d'autre part, que le moyen de guidage approximatif tel l'appui du champ 11 du plateau mobile contre le banc 10, lequel appui peut se poursuivre pendant toute la course de fermeture et peut être glissant ou roulant notamment dans la version presse horizontale.

Cet appui n'est toutefois pas nécessaire et, par exemple, le plateau mobile peut être suspendu à un engin de levage et/ou de manutention.

Grâce à ce mode original de guidage, l'accès aux faces utiles 6, 7 des plateaux est totalement libéré et le plateau mobile 3 reste entièrement indépendant du reste de la presse.

Il peut alors être échangé par exemple pour un changement rapide d'outillage.

Par ailleurs, lors du serrage, il est libre de se placer de manière telle que les parties de l'outillage seront toujours bien appliquées l'une sur l'autre, quels que soient les éventuels défauts de parallélisme de leurs faces d'appui entre elles et sur les plateaux.

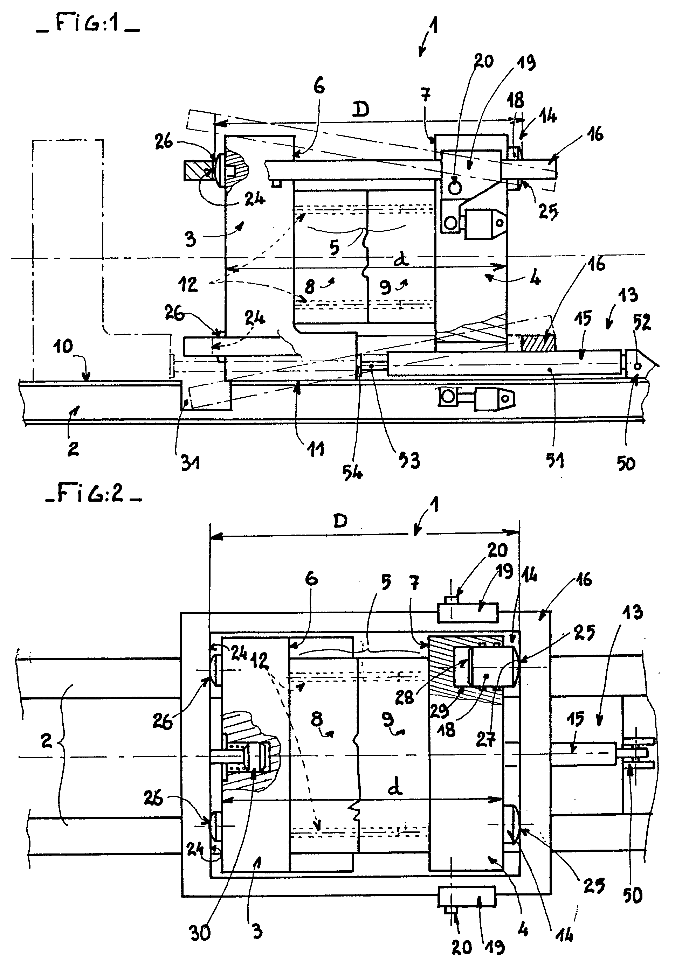

De manière connue, le mouvement de translation du plateau mobile s'effectue depuis une position extrême d'ouverture (schématisée en traits mixtes fins sur la figure 1), dans laquelle l'outillage 5 est largement ouvert, jusqu'à une position extrême de fermeture dans laquelle les parties constitutives de l'outillage coopèrent étroitement.

La phase de fermeture de la presse se déroule globalement en deux étapes.

Une étape d'approche des plateaux et une étape de serrage énergique.

Pour conduire ces deux étapes consécutives la presse 1 fait classiquement appel à des moyens distincts 13, 14, les uns dits d'approche assurant un déplacement rapide sur une grande distance mais sans effort important, les autres dits de serrage 14 assurant un déplacement sur une faible distance mais an développant la force de serrage.

Comme indiqué plus haut, les moyens d'approche 13 peuvent être extérieurs à la presse, tels un engin de levage et/ou de manutention, mais, de préférence, ils consistent en au moins un vérin 15 de faible section intercalés entre la plateau mobile 3 et un appui 50 solidaire du bâti et situé loin à l'avant de la face utile 6 du plateau mobile 3.

Dans cette disposition, le vérin d'approche n'augmente pas l'encombrement en longueur de la presse, ce qui est évidemment très avantageux.

Dans un mode préféré, au lieu d'être disposés sur au moins deux côtés opposés de la presse, ces moyens d'approche 13 sont disposés d'un même côté et ce sur le côté qui jouxte le plan d'appui 10 du bâti 2 de manière à préserver le libre accès aux faces utiles 6, 7 des plateaux 3, 4.

De préférence, notamment lorsque la presse est verticale, c'est par son cylindre 51 que le vérin 15 est associé, par exemple par un axe 52 à l'appui 50.

Afin qu'en cas de rupture de pistons, le descente du plateau mobile ne puisse brutalement être libérée, le plateau est relié au vérin d'approche par simple appui sur son extrémité et par exemple sur l'extrémité de la tige 53 qui, à cet effet, peut être conformée de manière à présenter une platine 54 permettant une éventuelle fixation sur le plateau mobile.

Les moyens de serrage 14 des plateaux 3, 4 sont intercalés entre l'un des plateaux 3, 4 et au molins un appui 25 situé en arrière du même plateau et relié à l'autre plateau par au moins un appui 24 d'une structure de bridage 16 apte à saisir et à tirer ce plateau vers celui derrière lequel sont montés les moyens de serrage 14.

Grâce à cette disposition, lorsque les moyens de serrage 14 consistent en des vérins, ceux-ci peuvent lors de leur effort maximum travailler en compression et donc dans les meilleures conditions possibles.

Ces vérins 14 peuvent de plus être à simple effet et comprendre un piston 18 qui, par sa face 27 opposée à sa face 28 de travail, est directement au contact de l'appui 25.

Son cylindre 29 peut être formé par un simple trou borgne creusé dans la face arrière du plateau 4.

De préférence, c'est en arrière du plateau fixe que sont situés les moyens de serrage 14.

Grâce à la liaison par la structure de bridage, l'indépendance entre les plateaux est préservée et, dans ces conditions, lors du serrage, ils restent libres de se placer de manière telle que les parties de l'outillage seront toujours bien appliquées l'une sur l'autre quels que soient les défauts éventuels de parallélisme de leurs faces d'appui entre elles et sur les plateaux, les vérins pouvant dans toutes ces circonstances assurer néanmoins un équilibre des pressions.

La distance «D» entre les appuis avant 24 et arrière 25 de la structure de bridage 16, est supérieure à celle «d» mesurée entre les faces arrière des plateaux, de manière à pouvoir se déplacer légèrement vers l'avant et vers l'arrière pour commander le déserrage et le serrage des plateaux.

Selon une forme non limitative de réalisation de l'invention, chaque structure de bridage 16 consiste globalement en un cadre rigide 21 sensiblement rectangulaire et de dimensions intérieures suffisantes pour passer autour des plateaux 3, 4. Ce cadre comprend donc deux longerons 22, 23 situés chacun d'un côté de la presse et, deux poutres transversales 24, 25 situées l'une (24) derrière le plateau mobile où elle sert d'appui avant pour ce plateaux et l'autre (25) derrière le plateau fixe 4 où elle sert d'appui arrière aux moyens de serrage 14.

Selon une caractéristique essentielle de l'invention, les moyens de serrage 14 associés à un plateau fixe ou mobile 4 prennent appui directement sur ce plateau et sur l'élément d'appui 25 de la structure de bridage 16 située derrière le plateau considéré. Au moins l'un des plateaux porte au moins un support 19 dans lequel chaque structure 16 est guidée en translation vers l'avant et l'arrière.

Indépendamment de ce guidage en translation, chaque structure est à l'une de ses extrémités pourvue d'un moyen d'articulation autour d'un axe orthogonal au sens de déplacement de la structure pour permettre son articulation par rapport à un plateau à savoir, de préférence, le plateau fixe.

Selon une forme préférée de réalisation appliquée à une presse verticale, ce moyen d'articulation de chaque cadre comprend essentiellement une rainure d'axe orthogonal au sens de déplacement de la structure, creusée sur le dessus des moyens de serrage 14 et, dans laquelle le cadre correspondant repose par simple gravité par sa poutre transversale 25.

Dans le cas d'une presse horizontale et, éventuellement, dans le cas d'une presse verticale, le moyen d'articulation est un tourillon 20 d'axe orthogonal au sens de déplacement de la structure et qui traverse le supporte 19 précité.

Entre chaque support 19 et un point fixe par rapport au plateau sur lequel l'extrémité du cadre s'articule, est intercalé un moyen de commande de l'oscillation, autour de l'axe du moyen d'articulation, de la structure 16 correspondante, de manière à faire basculer celle-ci jusqu'à dégager de l'autre plateau les appuis 24 correspondants et permettre l'ouverture de la presse. Dans un mode non limitatif de réalisation, la presse comporte deux structures de bridage 16 qui sont sensiblement parallèles entre elles et sont globalement disposées pour une répartition optimale des efforts de serrage sur l'outillage et, d'autre part, quatre moyens de serrage 14 qui sont répartis à raison de deux par structures 16 et ceci sensiblement aux angles d'un quadrilatère rectangle inscrit sur la face 14 du plateau auquel ils sont associés.

De préférence, chaque appui 24 des structures de bridage 16 coopèrent avec le plateau mobile 3 au moyen de plots 26 à portée sphérique et globalement répartis selon une même disposition que les organes de serrage 14 qui sont situés derrière le plateau en vis à vis.

De même dans une forme non limitative de réalisation de l'invention, les moyens de serrage 14 présentent pour coopérer avec l'appui 25 une portée sphérique 27.

Les moyens 17 commandant l'oscillation des supports 19 et de leurs structures de bridage sont par exemple constitués par des vérins hydrauliques.

Lorsque les moyens de serrage 14 sont constitués par des vérins à simple effet, la presse 1 comprend en outre un moyen de commande du dégagement de la structure de bridage 16 des plots 26 avant l'oscillation des structures de bridage 16 et l'ouverture de la presse.

Ce moyen de commande 30 est par exemple constitué par un vérin porté par la face arrière du plateau mobile 3 qui repousse la structure de bridage 16 de manière à obliger les moyens de serrage 14 à se rétracter.

Le bâti 2 pourra être constitué par de simples profilés dans lesquels bien entendu, une découpe 31 pourra si nécessaire être prévue pour dégager la place nécessaire à l'oscillation des structures de bridage 16.

**Revendications**

1. Presse du type à traction comprenant un bâti rigide (2) et au moins deux plateaux (3, 4) entre les faces utiles (6, 7) desquels est disposé un outillage (5) scindé en au moins deux parties principales (8, 9) portées chacune par l'un des plateaux (3, 4) et pourvues de leurs propres moyens (12) d'autopositionnement, dans laquelle presse :

— l'un (3) au moins des plateaux (3, 4) est mobile par rapport au bâti (2) et à l'autre plateau (4) qui est, quant à lui, fixe par rapport au bâti,

— le plateau mobile (3) présente au moins un champ (11) de guidage relatif sur une surface d'appui (10) du bâti (2), laquelle presse comprend en outre:

— des moyens (13) d'approche assurant un déplacement rapide du plateau mobile,

— des moyens (14) de serrage des plateaux fixe et mobile (3, 4)

— au moins une structure de bridage formé par un cadre rigide (21) sensiblement rectangulaire et de dimensions intérieures suffisantes pour passer avec jeu autour des plateaux fixe et mobile, ce cadre comprenant des longerons (22, 23) et deux poutres transversales d'appui (24, 25) situées derrière les plateaux fixe et mobile et permettant de retransmettre l'action des moyens de serrage (14) d'un des plateaux (3, 4) à l'autre, laquelle structure de bridage est associée à l'un des plateaux:

. d'une part, à l'une de ses extrémités, par un moyen d'articulation et,

. d'autre part, à une certaine distance de ce moyen d'articulation par des moyens de commande du basculement de la dite structure de manière à dégager du plateau opposé la poutre transversale d'appui correspondante et à permettre l'ouverture de la presse,

caractérisée en ce que les moyens de serrage (14) associés à l'un des plateaux fixe et mobile prennent appui directement sur ce plateau et sur la poutre transversale d'appui (25) de la structure de bridage (16), qui est située derrière le plateau considéré.

2. Presse selon la revendication 1, caractérisée en ce que, sur la structure, est monté un support (19) qui par rapport à celle-ci est libre en translation et en ce que chaque moyen de commande de l'oscillation agit sur la structure par l'intermédiaire de ce support.

3. Presse selon la revendication 2, caractérisée en ce que le moyen d'articulation est un tourillon (20) d'axe orthogonal au sens de déplacement de la structure traversant le support (19).

4. Presse selon la revendication 2, appliquée à une presse verticale caractérisée en ce que les moyens d'articulation comprennent essentiellement une rainure d'axe orthogonal au sens de déplacement de la structure et creusée sur le dessus des moyens de serrage (14) et dans laquelle rainure, le cadre repose par simple gravité par sa poutre transversale (25).

5. Presse selon l'une quelconque des revendications 1 à 4, caractérisée en ce qu'elle comprend un moyen de commande (30) du décollement des appuis de la structure de bridage (16) du plateau mobile.

6. Presse selon la revendication 5, caractérisée en ce que le moyen de commande (30) est constitué par un vérin porté par la face arrière du plateau mobile (3) qui repousse la structure de bridage (16) de manière à obliger les moyens de serrage (14) à se rétracter.

7. Presse selon l'une quelconque des revendications 1 à 6, caractérisée en ce qu'elle est dépourvue de colonnes de guidage du plateau mobile (3) par rapport au plateau fixe (4), lesquels ne comprennent pour leur guidage:

— d'une part, que les moyens (12) d'autopositionnement des parties (8, 9) de l'outillage (5), lesquels moyens d'autopositionnement n'interviennent qu'en fin de fermeture et,

— d'autre part, que le moyen de guidage approximatif du plateau mobile contre le bâti (10), lequel appui peut se poursuivre pendant toute la course de fermeture.

8. Presse selon l'une quelconque des revendications 1 à 7, dont les moyens d'approche consistent en au moins un vérin (15) de faible section intercalés entre le plateau mobile (3) et un appui (50) solidaire du bâti et situé loin à l'avant de la face utile (6) du plateau mobile (3), cette presse étant caractérisée en ce qu'au lieu d'être disposés sur au moins deux côtés opposés de la presse, ces moyens d'approche (13) sont disposés d'un même côté et ce sur le côté qui jouxte le plan d'appui (10) du bâti (2) de manière à préserver le libre accès aux faces utiles (6, 7) des plateaux (3, 4).

9. Presse selon la revendication 8, caractérisée en ce que le plateau mobile est relié au vérin d'approche par appui sur son extrémité qui, à cet effet, présente une platine (54).


**Patentansprüche**

1. Presse des Traktionstyps mit einem Maschinenrahmen (2) und zumindest zwei Platten (3, 4) zwischen deren Nutzseiten (6, 7) ein Arbeitsgerät (5) angeordnet ist, das zumindest in zwei Hauptteile (8, 9) teilbar ist, von denen jeder durch eine der Platten (3, 4) getragen ist und mit eigenen Mitteln (12) zum automatischen Positionieren versehen ist, wobei in der Presse:

— eine (3) zumindest der Platten (3, 4) mit Bezug auf den Maschinenrahmen (2) und zur anderen Platte (4) beweglich ist, die selbst bezüglich des Maschinenrahmens festgelegt ist,

— die bewegliche Platte (3) zumindest ein Führungsfeld (11) bezüglich einer Stützfläche (10) des Maschinenrahmens (2) aufweist, wobei die Presse ausserdem aufweist:

— Annäherungsmittel (13), die ein schnelles Versetzen der beweglichen Platte zulassen,

— Mittel (14) zum Spannen der festen und beweglichen Platte (3, 4),

— zumindest eine Flanschausbildung, die durch einen steifen Rahmen (21) gebildet wird, der im wesentlichen senkrecht und mit seinen Innenausmassen ausreichend verläuft, um mit Spiel um die feste und bewegliche Platte zu passen, wobei der Rahmen Längsträger (22, 23) und zwei Querstützträger (24, 25) aufweist, die hinter den festen und beweglichen Platten angeordnet sind und die Übermittlung der Wirkung der Spannmittel (14) einer der Platten (3, 4) zulassen, wobei die Flanschausbildung mit einer der Platten verbunden ist:

. Einerseits an einem ihrer Enden durch Gelenkmittel und

. andererseits mit einem gewissen Abstand von diesen Gelenkmitteln durch Mittel zum Steuern des Kippens der Ausbildung, so dass die Platte freigegeben wird, die dem entsprechenden Querstützträger gegenüberliegt und zum Zwecke des Öffnens der Presse,

dadurch gekennzeichnet, dass die Spannmittel (14), die mit einer (4) der festen und beweglichen Platte verbunden sind, direkt auf dieser Platte und auf dem Querstützträger (25) der Flanschausbildung (16) zur Anlage kommen, die hinter der betrachteten Platte angeordnet ist.

2. Presse nach Anspruch 1, dadurch gekennzeichnet, dass auf der Ausbildung ein Träger (19) montiert ist, der mit Bezug auf sie frei bewegt werden kann und dass jedes Steuermittel für die Hin- und Herbewegung auf die Ausbildung unter Zwischenschaltung der Führung einwirkt.

3. Presse nach Anspruch 2, dadurch gekennzeichnet, dass das Gelenkmittel ein Ständer (20) mit einer Achse ist, die rechtwinklig zur Bewegungsrichtung der die Führung (19) querenden Ausbildung verläuft.

4. Presse nach Anspruch 2, angewendet auf eine Vertikalpresse, dadurch gekennzeichnet, dass die Gelenkmittel im wesentlichen eine Rille aufweisen, die eine rechtwinklig zur Bewegungsrichtung der Ausbildung verlaufende Achse aufweist und auf der Oberseite der Spannmittel (14) vertieft ist, und dass in der Rille der Rahmen durch einfache Schwerkraft durch seinen Querträger (25) ruht.

5. Presse nach einem der Ansprüche 1 bis 4, dadurch gekennzeichnet, dass sie ein Steuermittel (30) zum Abheben der Flanschausbildung (16) der beweglichen Platte aufweist.

6. Presse nach Anspruch 5, dadurch gekennzeichnet, dass das Steuermittel (30) durch einen Zylinder gebildet ist, der durch die Rückseite der beweglichen Platte (3) getragen ist und der die Flanschausbildung (16) dergestalt zurückdrückt, dass die Spannmittel (14) zwangsweise zurückgezogen werden.

7. Presse nach einem der Ansprüche 1 bis 6, dadurch gekennzeichnet, dass zwei Führungskolonnen für die bewegliche Platte (3) mit Bezug auf die feste Platte (4) vorgesehen sind, wobei diese für ihre Führung aufweisen:

— einerseits nur Mittel (12) zum automatischen Positionieren der Teile (8, 9) des Arbeitsgerätes (5), wobei die Mittel zum automatischen Positionieren sich nur zu Ende des Schliessens auswirken und

— andererseits nur ein Mittel zum etwaigen Führen der beweglichen Platte gegen den Maschinenrahmen, dessen Stützen sich während des ganzen Verlaufs des Schliessens absetzen kann.

8. Presse nach einem der Ansprüche 1 bis 7, wobei die Annäherungsmittel zumindest aus einem Zylinder (15) mit geringem Querschnitt besteht, der zwischen die bewegliche Platte (3) und einem Anschlag (50) zwischengeschaltet ist, der einstückig mit dem Maschinenrahmen ausgebildet ist und weit vor der Nutzseite (6) der beweglichen Platte (3) angeordnet ist, wobei die Presse dadurch gekennzeichnet ist, dass anstelle der Anordnung auf zumindest zwei einander gegenüberliegender Seiten der Pressen die Annäherungsmittel (13) auf derselben Seite angeordnet sind und auf der Seite, die an die Stützebene (10) des Maschinenrahmens (2) dergestalt angrenzt, dass der freie Zugriff zu den Nutzseiten (6, 7) der Platten (3, 4) belassen wird.

9. Presse nach Anspruch 8, dadurch gekennzeichnet, dass die bewegliche Platte mit dem Annäherungszylinder durch Anlage an seinem Ende verbunden ist, welches zu diesem Zweck eine Halteplatte (54) aufweist.

## Claims

1. A press of the traction type comprising a rigid stand (2) and at least two chucks (3, 4), between the effective sides (6, 7) of which is arranged a set of tools (5) divided into at least two main parts (8, 9) each carried by one of the chucks (3, 4) and provided with their own means (12) of self-positioning, in which press:

— at least one (3) of the chucks (3, 4) is movable in relation to the stand (2) and to the other chuck (4) which is in its turn fixed in relation to the stand,

— the movable chuck (3) has at least one field (11) of relative guiding on a bearing surface (10) of the stand (2),

— which press further comprises:

— advancing means (13) which ensure rapid displacement of the movable chuck,

— means (14) for clamping the fixed and the movable chucks (3, 4),

— at least one bracing structure formed by a rigid framework (21) substantially rectangular and with large enough interior dimensions to let it clear the fixed and movable chucks, this framework comprising stringers (22, 23) and two transverse bearing beams (24, 25) situated behind the fixed and movable chucks and allowing the action of the clamping means (14) to be re-transmitted from one of the chucks (3, 4) to the other, which bracing structure is associated with one of the chucks:

. on the one hand, at one of its ends, by a hinge arrangement, and

. on the other hand, at a certain distance from this hinge arrangement, by means for controlling the swinging of the said structure in such a way as to detach the corresponding transverse bearing beam from the opposite chuck and to allow the press to be opened,

characterised in that the clamping means (14) associated with one (4) of the fixed and movable chucks rest directly on this chuck and on the transverse bearing beams (25) of the bracing structure (16) which is situated behind the chuck in question.

2. A press according to Claim 1, characterised in that there is mounted on the structure a support (19) which is free to move in relation to the said structure, and in that each means for controlling oscillation acts on the structure via this support.

3. A press according to Claim 2, characterised in that the hinge arrangement is a pivot pin (20) having an axis orthogonal to the direction of displacement of the structure crossing the support (19).

4. A press according to Claim 2 applied to a vertical press, characterised in that the hinge arrangement comprise essentially a groove having an axis orthogonal to the direction of displacement of the structure and hollowed out on the top of the clamping means (14) and in which groove the frame rests by pure gravity by its transverse beam (25).

5. A press according to any one of Claims 1 to 4, characterised in that it comprises a means (30) for controlling the detaching of the supports of the bracing structure (16) from the movable chuck.

6. A press according to Claim 5, characterised in that the control means (30) consists of a jack carried by the back of the movable chuck (3) which pushes the bracing structure (16) in such a way as to force the clamping means (14) to withdraw.

7. A press according to any one of Claims 1 to 6, characterised in that it lacks columns for guiding the movable chuck (3) in relation to the fixed chuck (4), which chucks only comprise for their guiding:

— on the one hand, the means (12) for self-positioning the parts (8, 9) of the set of tools (5), which means for self-positioning do not intervene until the end of closing, and

— on the other hand, the means for approximately guiding the movable chuck against the stand (10), which support can continue during the whole closing process.

8. A press according to any one of Claims 1 to 7, whose advancing means consist of at least one jack (15) having a small cross-section interposed between the movable chuck (3) and a support (50) which is in one piece with the stand and situated far in front of the effective side (6) of the movable chuck (3), this press being characterised in that, instead of being arranged on at least two opposite sides of the press, these advancing means (13) are arranged on the same side and indeed on the side next to the bearing plane (10) of the stand (2), in such a way as to keep free the access to the effective sides (6, 7) of the chucks (3, 4).

9. A press according to Claim 8, characterised in that the movable chuck is joined to the advancing jack by resting on its end which has for this purpose a plate (54).

_FiG:1_

_FiG:2_

_FIG:3_

_FIG:4_

_FIG:5_

_FIG:6_